# EUROPÄISCHE PATENTSCHRIFT

(11) **EP 2 902 303 B1**
(45) Veröffentlichungstag und Bekanntmachung des Hinweises auf die Patenterteilung: **16.11.2016**
(21) Anmeldenummer: 14153651.6
(22) Anmeldetag: 03.02.2014
(51) Int. Cl.: B62D 21/11

(54) **Hilfsrahmen für ein Kraftfahrzeug, insbesondere Vorderachs-Hilfsrahmen, und Karosserie mit einem solchen Hilfsrahmen**
Subframe for a motor vehicle, in particular front axle subframe, and body with such a subframe
Faux-châssis pour un véhicule automobile, notamment faux-châssis d'essieu avant et carrosserie dotée d'un tel faux-châssis

(43) Veröffentlichungstag der Anmeldung: 05.08.2015
(73) Patentinhaber: Autotech Engineering Deutschland GmbH, 33647 Bielefeld (DE)
(72) Erfinder: Haselhorst, Kai, 33775 Versmold (DE); Friesen, Viktor, 33659 Bielefeld (DE)
(74) Vertreter: Cohausz & Florack

(56) Entgegenhaltungen:
- WO-A1-2005/075281
- DE-A1-102005 035 995
- DE-A1-102009 034 860
- FR-A1- 2 872 481
- US-A1- 2007 278 778

## Beschreibung

Die Erfindung betrifft einen Hilfsrahmen für ein Kraftfahrzeug, insbesondere Vorderachs-Hilfsrahmen, mit einem ersten Schalenelement und einem zweiten Schalenelement, das mit dem ersten Schalenelement starr verbunden ist und mit demselben einen Hohlraum definiert, und mit mindestens einer Karosserieanbindungshülse zum Durchstecken einer Schraube, wobei die Karosserieanbindüngshülse an einem ihrer Enden an einem Durchgangsloch des ersten Schalenelements festgelegt ist und sich innerhalb des Hohlraums in Richtung eines Durchgangslochs des zweiten Schalenelements erstreckt.

Des Weiteren betrifft die Erfindung eine Karosserie für ein Kraftfahrzeug mit einem solchen Hilfsrahmen.

Bekannte Vorderachs-Hilfsrahmen für Kraftfahrzeuge sind aus Schalenelementen aufgebaut und haben Karosserieanbindungsstellen, über die sie mittels Schrauben starr an karosserieseitigen Längsträgern angebunden werden. Die jeweilige Karosserieanbindungsstelle ist hierzu üblicherweise mit einer einteiligen Karosserieanbindungshülse (Distanzhülse) versehen, die am Hilfsrahmen angeschweißt ist oder erst bei der Montage am Hilfsrahmen lose in einen von einem oder zwei Schalenelementen des Hilfsrahmens definierten Hohlraum eingesetzt wird (vgl. DE 10 2006 058 993 A1 und DE 10 200934860 oder WO2005075281).

Da die Bohrungsdurchmesser der Karosserieanbindungshülsen konstruktiv bedingt größer sind als die Außendurchmesser der durchgesteckten Schrauben, ist ein Rutschen des Vorderachs-Hilfsrahmens relativ zur Karosserie möglich. Das Schraubenspiel in den Karosserieanbindungshülsen wird gewünscht, um bei Überschreitungen von Fertigungstoleranzen eine einfachere Karosseriemohtage sicherzustellen.

Andererseits muss ein Rutschen des Vorderachs-Hilfsrahmens relativ zur Karosserie verhindert werden, da beim Beschleunigen und Bremsen die Kräfte aus dem Radaufstandspunkt, d.h. dem Schnittpunkt der Radmittelebene auf der Fahrbahnebene auf die Karosserie übertragen werden. In diesem Zusammenhang besteht insbesondere bei stark motorisierten Fahrzeugen und elektromotorangetriebenen Fahrzeugen, die aufgrund ihrer Rekuperationsbremsen über hohe Drehmomente verfügen, die Gefahr, dass die Karosserie zu schwimmen beginnt. Im Extremfäll kann dieses Schwimmen aufgrund der dynamischen Belastung zu einem Bauteilversagen führen.

Der vorliegenden Erfindung lag die Aufgabe zugrunde, ein Hilfsrahmen der eingangs genannten Art zu schaffen, der sich einfach montieren lässt und eine hohe Sicherheit gegen Verrutschen relativ zur Karosserie bietet.

Gelöst wird diese Aufgabe durch einen Hilfsrahmen mit den Merkmalen des Anspruchs 1. Bevorzugte und vorteilhafte Ausgestaltungen des erfindungsgemäßen Hilfsrahmens sind in den Unteransprüchen angegeben.

Der erfindungsgemäße Hilfsrahmen ist dadurch gekennzeichnet, dass dem festgelegten Ende der Karosserieanbindungshülse eine ringförmige Scheibe zugeordnet ist, die radial gegenüber der Hülsenmantelfläche vorsteht, außenseitig des ersten Schalenelements angeordnet und stoffschlüssig mit demselben verbunden ist, und des Weiteren dadurch, dass an dem Durchgangsloch des zweiten Schalenelements, dem das andere Ende der Karosserieanbindungshülse zugewandt ist, außenseitig eine von der Karosserieanbindungshülse separat gefertigte Zahnscheibe angeordnet ist, deren Außendurchmesser größer als der Innendurchmesser des Durchgangslochs des zweiten Schalenelements ist und die stoffschlüssig mit dem zweiten Schalenelement verbunden ist.

Die erfindungsgemäße Lösung bietet insbesondere den Vorteil, dass die Karosserieanbindungshülse, die ringförmige Scheibe und die demgegenüber separat gefertigte ringförmige Zahnscheibe zu relativ günstigen Herstellungskosten optimal hinsichtlich der gewünschten rutschsicheren Anbindung des Hilfsrahmens am die Karosserie gestaltet werden können, ohne das Bauteilgewicht der Karosserieanbindung übermäßig zu erhöhen. Die Zahnstruktur (Verzahnung) der Zahnscheibe erhöht den Reibwert zwischen dem Hilfsrahmen und der angebundenem Karosserie und trägt damit zur rutschsicheren Anbindung des Hilfsrahmens bei. Vorzugsweise weist auch die dem festgelegten Ende der Karosserieanbindungshülse zugeordnete ringförmige Scheibe eine gezahnte Stirnseite auf.

Insbesondere kann die Zahnscheibe als separates Element material- und bearbeitungszeitsparend gefertigt werden. Dies gilt insbesondere für den Fall, dass der Außendurchmesser der Zahnscheibe zumindest an ihrer gezahnten Stirn- oder Oberseite deutlich größer gewählt wird als der Außendurchmesser der dem festgelegten Ende der Karosserieanbindungshülse zugeordneten Scheibe an deren der Karosserieanbindungshülse abgewandten Stirnseite. Diesbezüglich sind eine Vielzahl von Durchmesservariationen bzw. Durchmesserverhältnisses zwischen dem Außendurchmesser der Zahnscheibe und dem Außendurchmesser der anderen Scheibe möglich. Des Weiteren ermöglicht die erfindungsgemäße Lösung eine Herstellung von Zahnscheibe und Karosserieanbindungshülse aus unterschiedlichen Materialien, insbesondere unterschiedlich harten Materialien.

Eine vorteilhafte Ausgestaltung des erfindungsgemäßen Hilfsrahmens ist dadurch gekennzeichnet, dass die separat gefertigte Zahnscheibe aus einem härteren Material, vorzugsweise Stahl, als dem Material, insbesondere Stahl, der Karosserieanbindungshülse und/oder der anderen ringförmigen Scheibe hergestellt ist. Durch diese Ausgestaltung lässt sich sicherstellen, dass auch Karosserieteile aus hoch- und ultrahochfesten Stahllegierungen, z.B. aus Dualphasenstahl DP 550 oder DP 600, an den Hilfsrahmen zuverlässig und dauerhaft angebunden werden können. Hoch- und ultrahochfeste Stähle wie z.B. DP 550 oder DP 600 zeichnen sich durch ein geringes Gewicht bei hoher Festigkeit und guter Schweißbarkeit aus.

Eine weitere vorteilhafte Ausgestaltung des erfindungsgemäßen Hilfsrahmens ist dadurch gekennzeichnet, dass die separat gefertigte Zahnscheibe, die stoffschlüssig, vorzugsweise durch eine Schweißverbindung mit dem zugeordneten Schalenelement des Hilfsrahmens verbunden ist, einen Außendurchmesser aufweist, der mindestens das 1,4-fache, vorzugsweise mindestens das 1,5-fache des kleinsten Außendurchmessers der Hülsenmantelfläche beträgt. Bei einem großen Zahnscheibenaußendurchmesser kann eine Schweißnaht mit einem vergleichsweise großen Durchmesser realisiert werden, die im Vergleich zu Schweißnähten mit kleineren Durchmessern eine höhere Festigkeit aufweist.

Nach einer weiteren vorteilhaften Ausgestaltung der Erfindung weist die separat gefertigte Zahnscheibe einen an dem zweiten Schalenelement anliegenden Befestigungsflansch auf, der einen die gezahnte Ober- oder Stirnseite der Zahnscheibe umgebenden Absatz definiert. Dieser Absatz, der vorzugsweise eine runde Kehle aufweist, bewirkt eine Reduzierung von Spannungen, die an einer Schweißnaht zwischen Zahnscheibe und Schalenelement auftreten können. Die Dauerfestigkeit der Schweißverbindung von Zahnscheibe und Schalenelement wird somit verbessert. In diesem Zusammenhang ist es zweckmäßig, wenn der Befestigungsflansch der Zahnscheibe einen Außendurchmesser aufweist, der beispielsweise mindestens das 1,1- fache, vorzugsweise mindestens das 1,2-fache des kleinsten Außendurchmessers der Zahnscheibe beträgt.

Um (auch) die an einer Schweißverbindung zwischen der dem festgelegten Ende der Karosserieanbindungshülse zugeordneten ringförmigen Scheibe und dem angeschweißten Schalenelement auftretenden Spannungen zu minimieren, ist nach einer weiteren Ausgestaltung der Erfindung vorgesehen, dass die ringförmige Scheibe einen an dem ersten Schalenelement anliegenden Befestigungsflansch aufweist, der einen die Stirnseite der ringförmigen Scheibe umgebenden Absatz definiert. Der Befestigungsflansch weist dabei beispielsweise einen Außendurchmesser auf, der mindestens das 1,4- fache, vorzugsweise mindestens das 1,5-fache des kleinsten Außendurchmessers der Karosserieanbindungshülse beträgt.

Eine weitere bevorzugte Ausgestaltung der Erfindung sieht vor, dass durch Anziehen der in die Karosserieanbindungshülse einsteckbaren Schraube das zweite Schalenelement zwischen der separat gefertigten Zahnscheibe und der Karosserieanbindungshülse einklemmbar ist. Diese Ausgestaltung trägt zu einer Entlastung der Schweißnaht an der Zahnscheibe bei. Es besteht allerdings auch die Möglichkeit, das Durchgangsloch in dem zweiten Schalenelement soweit zu vergrößern, dass die Karosserieanbindungshülse die Zahnscheibe unmittelbar kontaktiert.

Die dem festgelegten Ende der Karosserieanbindungshülse zugeordnete ringförmige Scheibe kann ebenfalls separat von der Karosserieanbindungshülse gefertigt sein. Insbesondere kann sie mit dem Ende der Karosserieanbindungshülse stoffschlüssig verbunden sein. Die ringförmige Scheibe kann somit auch als Flansch bezeichnet werden. Alternativ kann die Scheibe (Flansch) aber auch einteilig mit der Karosserieanbindungshülse ausgebildet sein. Im letztgenannten Fall können die Karosserieanbindungshülse und die Scheibe/der Flansch aus einem einzigen Werkstück gefertigt, beispielsweise gefräst sein. Die Scheibe/der Flansch können als Kopf der Karosserieanbindungshülse bezeichnet werden.

Insbesondere aus Gründen der Gewichtsreduzierung sowie aus Gründen einer kostengünstigen Fertigung ist der erfindungsgemäße Hilfsrahmen, nach einer bevorzugten Ausgestaltung aus einer Unterschale und einer damit starr verbundenen Oberschale aufgebaut. Die Unterschale sowie die Oberschale sind vorzugsweise aus Stahlblech gefertigt. Das oben genannte erste Schalenelement stellt vorzugsweise die Unterschale dar, während dann die Oberschale aus dem oben genannten zweiten Schalenelement besteht jedoch kann es sich bei dem ersten Schalenelement und dem zweiten Schalenelement des erfindungsgemäßen Hilfsrahmens auch um die Schenkel eines einteiligen Blechformteils, beispielsweise um die Schenkel eines Blechformteils, das ein im Wesentlichen U-förmiges Querschnittsprofil aufweist, handeln.

Ferner wird die oben aufgezeigte Aufgabe durch eine Karosserie mit den Merkmalen des Anspruchs 13 oder 14 gelöst. Die mit einem erfindungsgemäßen Hilfsrahmen ausgerüstete Karosserie ist dadurch gekennzeichnet, dass die separat gefertigte Zahnscheibe eine höhere Härte aufweist als der damit verbundene Abschnitt der Karosserie und/oder dass die dem festgelegten Ende der Karosserieanbindungshülse zugeordnete ringförmige Scheibe eine höhere Härte aufweist als ein damit verbundenes Karosserieblech.

Nachfolgend wird die Erfindung anhand einer mehrere Ausführungsbeispiele darstellenden Zeichnung näher erläutert. Es zeigen:
- Fig. 1: einen Vorderachs-Hilfsrahmen in einer perspektivischen Darstellung;
- Fig. 2: einen Abschnitt des Vorderachs-Hilfsrahmens der Fig. 1 mit einer hinteren Karossedeanbindungsstelle in einer vergrößerten perspektivischen Darstellung;
- Fig. 3: einen Abschnitt des Vorderachs-Hilfsrahmens der Fig. 1 angebunden an einen Längsträger einer Karosserie sowie an ein Abstützungsblech, in einer Vertikalschnittansicht;
- Fig. 4: einen Abschnitt eines Vorderachs-Hilfsrahmens gemäß einem zweiten Ausführungsbeispiel angebunden an einen Längsträger einer Karosserie sowie an ein Abstützungsblech, in einer Vertikalschnittansicht; und
- Fig. 5: einen Abschnitt eines Vorderachs-Hilfsrahmens gemäß einem dritten Ausführungsbeispiel angebunden an einen Längsträger einer Karosserie sowie an ein Abstützungsblech, in einer Vertikalschnittansicht.

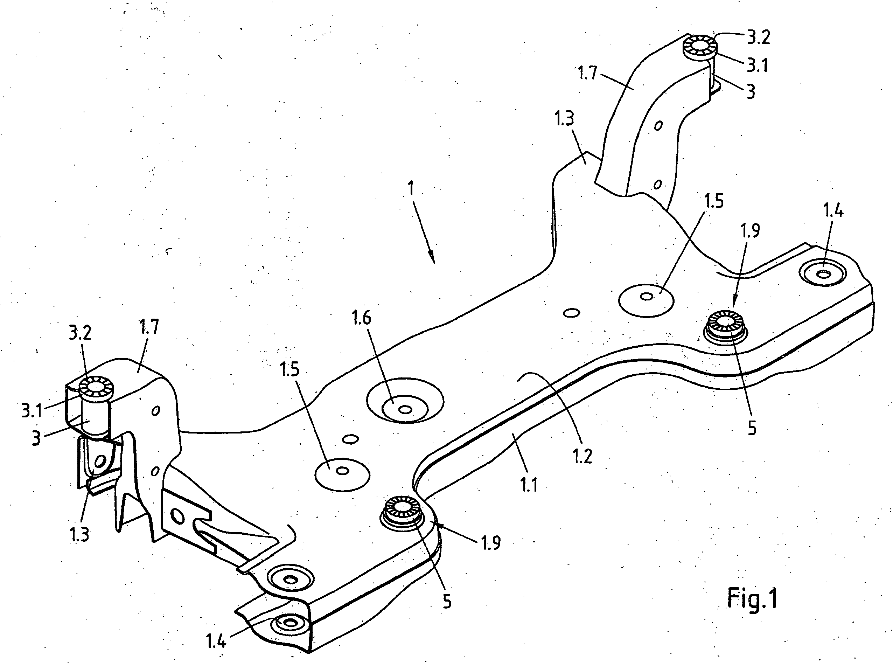

Bei dem in Fig. 1 dargestellten Formteil 1 handelt es sich um einen Vorderachs-Hilfsrahmen für ein Kraftfahrzeug. Der Hilfsrahmen 1 ist in Schalenbauweise ausgeführt. Er ist aus einem ersten Schalenelement 1.1 und einem zweiten Schalenelement 1.2 aufgebaut, die miteinander verschweißt sind und einen Hohlraum 2 definieren. In dem dargestellten Ausführungsbeispiel kann das erste Schalenelement 1.1 auch als Unterschale und das zweite Schalenelement 1.2 als Oberschale bezeichnet werden. Die Ränder von Unterschale 1.1 und Oberschale 1.2 sind beispielsweise im Überlappstoß aneinandergefügt.

An den Querseiten des Hilfsrahmens 1 sind Anbindungsstellen 1.3,1.4 zur Aufnahme von karosserieseitigen Lagerelementen (z.B. Gummilagerbuchsen) eines linken bzw. rechten Querlenkers (nicht gezeigt) einer Radaufhängung ausgebildet. Des Weiteren weist die Oberschale 1.2 sockelförmige Ausprägungen 1.5 auf, die mit Befestigungsmitteln bzw. Schraubenlöchern zur starren Anbindung eines Lenkgetriebegehäuses (nicht gezeigt) versehen sind. Ferner ist in einem als Querträger dienenden Abschnitt des Hilfsrahmens 1 eine Abstützungsstelle 1.6 für eine Motorpendelstütze ausgebildet.

Der Hilfsrahmen 1 wird mit der Karosserie des Kraftfahrzeuges starr verbunden. Hierzu sind an der Oberschale 1.2 sowie der Unterschale 1.1 Tragarme (Konsolen) 1.7 angeschweißt, die aus miteinander verschweißten Blechschalen gebildet sind. An den Enden der Tragarme 1.7 sind Anbindungsbuchsen (Anbindungshülsen) 3 zum Durchstecken von Schrauben befestigt, vorzugsweise angeschweißt. Die Anbindungsbuchsen 3 definieren vordere Karosserieanbindungsstellen. Sie weisen jeweils einen flanschförmigen Kopf 3.1 auf, der an seiner Stirnseite (Oberseite) eine Zahnstruktur (Verzahnung) 3.2 aufweist. Des Weiteren ist der Hilfsrahmen 1 mit hinteren Karosserieanbindungsstellen 1.9 zum Durchstecken von Schrauben versehen.

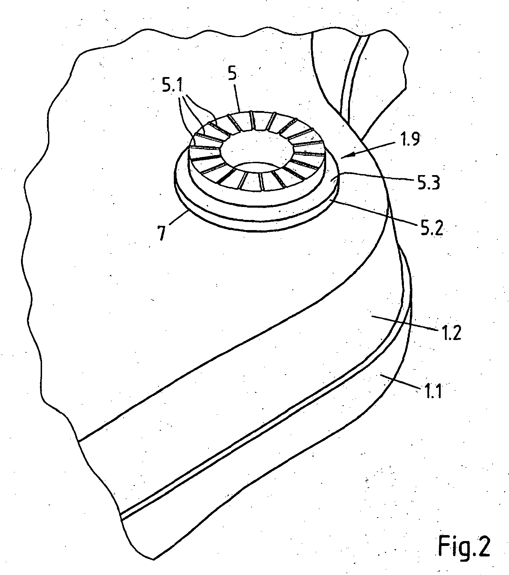

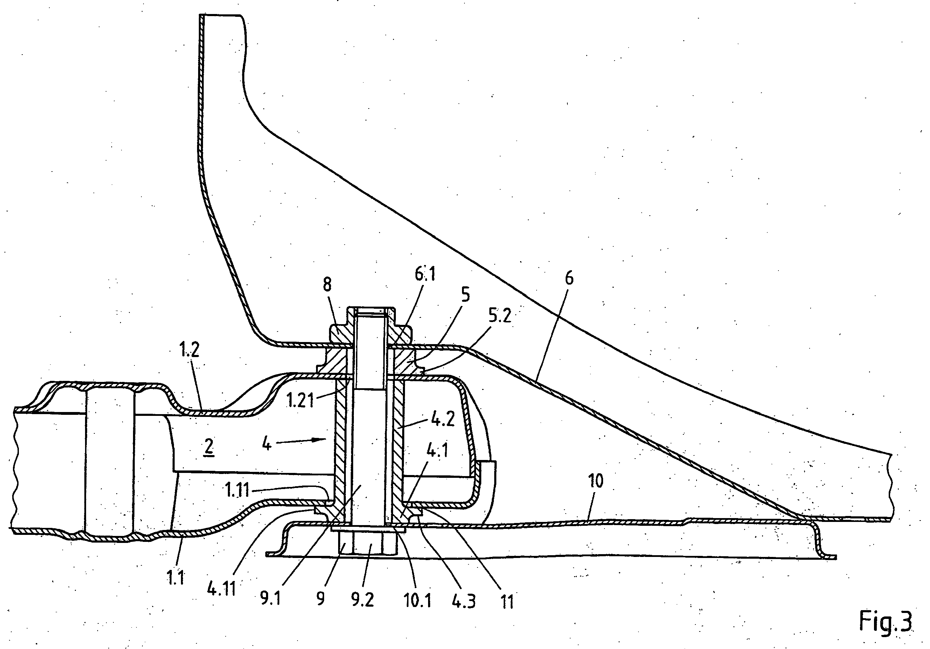

Der Aufbau einer dieser hinteren Karosserieanbindungsstellen 1.9 ist am besten in den Figuren 2 und 3 zu erkennen.

Die Unterschale 1.1 weist ein als Bohrung oder Ausschnitt ausgeführtes Durchgangslochs 1.11 zur Aufnahme einer Karosserieanbindungshülse 4 auf. Die Hülse 4 weist eine radial gegenüber der Hülsenmantelfläche vorstehende Scheibe 4.1 auf, die auch als Flansch oder ringförmiger Kopf bezeichnet werden kannauf. Der Kopf (Flansch) 4.1 ist vorzugsweise einteilig mit der Karosserieanbindungshülse 4 ausgebildet. Hierzu können Hülse 4 und Kopf 4.1 zusammen aus einem einzigen metallischen Werkstück, vorzugsweise aus Stahlwerkstoff, gefräst sein. Es ist jedoch auch möglich, den Kopf (Flansch) 4.1 und die Hülse 4 separat voneinander zu fertigen und anschließend miteinander fest zu verbinden, beispielweise miteinander zu verschweißen. In beiden Fällen wird der Durchmesser des Durchgangslochs 1.11 in der Unterschale 1.1 so bemessen, dass die Karosserieanbindungshülse 4 mit Spiel in das Durchgangsloch 1.11 eingesteckt werden kann und der radial vorstehende Kopf 4.1 der eingesteckten Hülse 4 an der Außenseite (Unterseite) der Unterschale 1.1 am Rand des Durchgangslochs 1.11 anliegt.

Die Oberschale 1.2 weist ebenfalls ein als Bohrung oder Ausschnitt ausgeführtes Durchgangslochs 1.21 auf. Das Durchgangsloch 1.21 liegt dem Durchgangslochs 1.11 der Unterschale 1.1 gegenüber und fluchtet mit diesem. In dem dargestellten Ausführungsbeispiel ist der Durchmesser des Durchgangslochs 1.21 der Oberschale 1.2 kleiner als der Außendurchmesser des im Hohlraum angeordneten Hülsenabschnitts 4.2. Der Durchmesser des Durchgangslochs 1.21 der Oberschale 1.2 entspricht dem Innendurchmesser des zylindrischen Hülsenabschnitts 4.2 oder ist etwas kleiner als dieser. Die Länge der Karosserieanbindungshülse 4 ist so bemessen, dass sie im montierten Zustand des Hilfsrahmens 1 an der Innenseite der Oberschale 1.2 am Rand des Durchgangslochs 1.21 anliegt.

An dem Durchgangsloch 1.21 ist eine ringförmige Zahnscheibe 5 stoffschlüssig mit der Außenseite der Oberschale 1.2 verbunden, vorzugsweise verschweißt. Die der Oberschale 1.2 abgewandte Stirnseite der Zahnscheibe 5 weist eine Zahnstruktur (Verzahnung) 5.1 auf, die den Reibwert zwischen der Scheibe 5 und einem angebundenen Karosserieteil, beispielsweise einem Karosserie-Längsträger 6 erhöht.

Die an der Oberschale 1.2 anliegende Seite der Zahnscheibe 5 ist dagegen vorzugsweise im Wesentlichen glatt ausgebildet (vgl. Figuren 2 und 3).

Der Innendurchmesser der Zahnscheibe 5 entspricht dem Innendurchmesser des zylindrischen Hülsenabschnitts 4.2 oder ist etwas kleiner als dieser. Der Außendurchmesser der Zahnscheibe 5 lässt sich variabel ausführen. Insbesondere kann der Außendurchmesser der Zahnscheibe 5 möglichst groß gewählt werden, um eine entsprechend große bzw. lange Schweißnaht an der durch die Oberschale 1.2 und den Außenumfang der Zahnscheibe 5 definierten Kehle 7 erzielen zu können. Die Schweißverbindung der Zahnscheibe 5 weist dadurch eine höhere Festigkeit als bei Schweißnähten mit kleinerem Durchmesser auf.

Auch die Größe der Zahnanlagefläche ist variabel. So kann der Außendurchmesser der Zahnscheibe 5 an deren gezahnter Stirnseite gleich groß, größer oder kleiner als ihr Außendurchmesser an der an der Oberschale 1.2 anliegenden Seite sein. In dem dargestellten Ausführungsbeispiel ist der Außendurchmesser der Zahnscheibe 5 an ihrer gezahnten Stirnseite kleiner als ihr Außendurchmesser an der an der Oberschale 1.2 anliegenden Seite. Die Zahnscheibe 5 weist in diesem Fall einen an der Oberschale 1.2 anliegenden Befestigungsflansch 5.2 auf, der einen die verzahnte Ober- oder Stirnseite der Zahnscheibe 5 umgebenden Absatz 5.3 definiert. Die umlaufende Kehle des Absatzes 5.3 ist im Querschnitt betrachtet vorzugsweise konkav gerundet (vgl. Fig. 3).

Die Karosserie ist zur starren Anbindung des Hilfsrahmens 1 mit Muttern 8 versehen, die stoffschlüssig, vorzugsweise durch Schweißen, an der Karosserie, beispielsweise an Karosserie-Längsträgern 6 angebracht sind. In Fig. 3 ist ein Abschnitt eines Karosserie-Längsträgers 6 gezeigt, der ein Durchgangsloch 6.1 mit einer am Lochrand angeschweißten Mutter 8 aufweist. Die Mutter 8 ist auf der der Anlagefläche der Zahnscheibe 5 abgewandten Seite des Bleches des Längsträgers 6 angeordnet.

Der Hilfsrahmen 1 wird mittels Schrauben 9, die durch die Karosserieanbindungshülsen 4 gesteckt und in die zugeordneten, an den Längsträgern 6 befestigten Muttern 8 eingeschraubt werden, an der Karosserie angebunden. Vorzugsweise kann dabei zusätzlich ein Abstützungsblech 10 am Kopf 4.1 der Hülse angebunden werden. Das Abstützungsblech 10 weist hierzu ein Durchgangsloch 10.1 auf, dessen Durchmesser größer als der Schaft 9.1 der Schraube 9 und kleiner als der Durchmesser des Schraubenkopfes 9.2 ist.

Die dem Abstützungsblech 10 abgewandte Stirnseite des Hülsenkopfes 4.1 weist vorzugsweise ebenfalls eine Zahnstruktur (Verzahnung) auf, die den Reibwert zwischen dem Hülsenkopf 4.1 und dem Abstützungsblech 10 erhöht. Die an der Unterschale 1.1 anliegende Seite des Hülsenkopfes (Flansches) 4.1 ist dagegen im Wesentlichen glatt ausgebildet.

Der Außendurchmesser des Hülsenkopfes 4.1 lässt sich ebenfalls variabel ausführen. Insbesondere kann sein Außendurchmesser möglichst groß gewählt werden, um eine entsprechend große bzw.lange Schweißnaht an der durch die Unterschale 1.1 und den Umfang des Hülsenkopfes 4.1 definierten Kehle 11 erzielen zu können.

Auch die Größe der dem Abstützungsblech 10 zugewandten Stirnfläche des Hülsenkopfes 4.1 ist variabel. So kann der Außendurchmesser des Hülsenkopfes 4.1 an seiner Stirnseite gleich groß, größer oder kleiner als sein Außendurchmesser an der an der Unterschale 1.1 anliegenden Seite sein. In dem dargestellten Ausführungsbeispiel ist der Außendurchmesser des Hülsenkopfes 4.1 an seiner Stirnseite kleiner als sein Außendurchmesser an der an der Unterschale 1.1 anliegenden Seite. Der Hülsenkopf 4.1 weist in diesem Fall einen an der Unterschale 1.1 anliegenden Befestigungsflansch 4.11 auf, der einen die Stirnseite umgebenden Absatz 4.3 definiert. Die umlaufende Kehle des Absatzes 4.3 ist im Querschnitt betrachtet vorzugsweise konkav gerundet (vgl. Fig. 3).

Die Oberschale 1.2 wird beim Anziehen der Schraube 9 zwischen der Zahnscheibe 5 und der Karosserieanbindungshülse 4 geklemmt.

Die Zahnscheibe 5 ist vorzugsweise aus einem Stahlwerkstoff gefertigt, der härter als das Karosseriematerial ist. Die Karosserie bzw. deren Längsträger 6 können aus hochfestem Stahlwerkstoff, beispielsweise aus Dualphasenstahl der Sorte DP 550 oder DP 600 bestehen. Das Abstützungsblech 10 kann dagegen aus nicht gehärtem Stahl, beispielsweise aus Stahl der Sorte St 53 bestehen. Die Karosserieanbindungshülse 4, insbesondere ihr Kopf 4.1, vorzugsweise gezahnter Kopf 4.1, ist aus einem Stahlwerkstoff gefertigt, der härter als das Material des Abstützungsbleches 10 ist. Das Material der Karosserieanbindungshülse 4 muss jedoch nicht so hart sein wie das Material der separat gefertigten Zahnscheibe 5. Vorzugsweise ist das Material der Karosserieanbindungshülse 4 weicher als das Material der separat gefertigten Zahnscheibe 5.

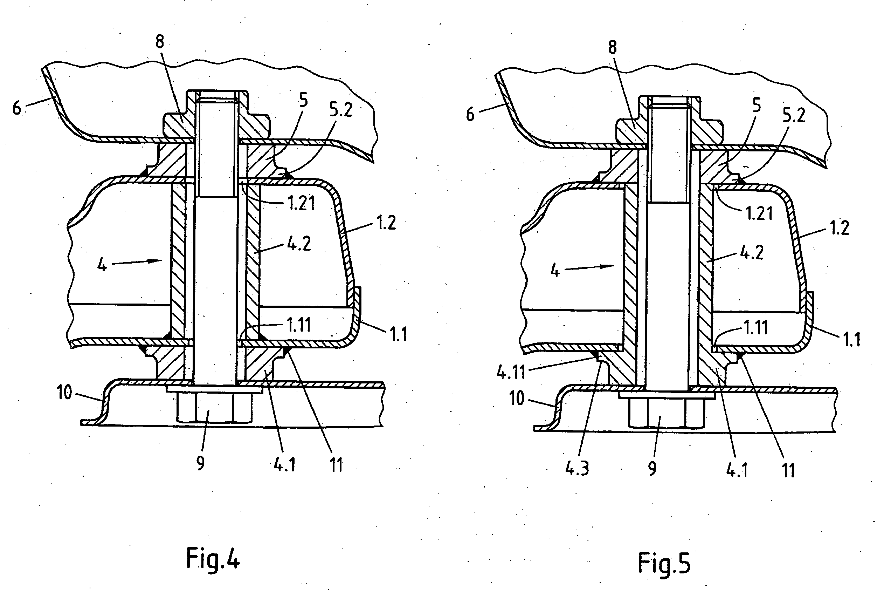

Das in Fig. 4 gezeigte Ausführungsbeispiel unterscheidet sich von dem in Fig. 3 gezeigten Beispiel dadurch, dass die ringförmige Scheibe 4.1 und die Karosserieanbindungshülse 4 getrennt voneinander gefertigt und nicht stoffschlüssig miteinander verbunden sind. Die Karosserieanbindungshülse 4 ist an ihrem der Unterschale 1.1 zugewandten Ende an dem Durchgangsloch 1.11 festgelegt. Hierzu kann das Ende der Hülse 4 an der Innenseite der Unterschale 1.1 beispielsweise angeschweißt sein. Alternativ kann die Festlegung der Karosserieanbindungshülse 4 an dem Durchgangsloch 1.11 auch dadurch realisiert sein, dass neben dem Durchgangsloch 1.11 warzenförmige Erhebungen z. B. durch Auftragschweißen vorgesehen sind, die die zwischen Unterschale 1.1 und Oberschale 1.2 angeordnete, vorzugsweise eingeklemmte, Hülse 4 gegen seitliche Verschiebung gegenüber dem Durchgangsloch 1.11 sichern. Die ringförmige Scheibe 4.1 ist vorzugsweise als Zahnscheibe ausgebildet und weist gegebenenfalls an ihrer der Unterschale 1.1 abgewandten Stirnseite eine Verzahnung (Zahnstruktur) auf. Die an der Unterschale 1.1 anliegende Seite der Scheibe 4.1 ist dagegen vorzugsweise im Wesentlichen glatt ausgebildet.

Das in Fig. 5 dargestellte Ausführungsbeispiel unterscheidet sich von dem Ausführungsbeispiel in Fig. 3 dadurch, dass das Durchgangsloch 1.21 im zweiten Schalenelement 1.2 so groß gewählt ist, dass die Karosserieanbindungshülse 4 die Zahnscheibe 5 unmittelbar kontaktiert.

Die Ausführung der Erfindung ist nicht auf die in der Zeichnung dargestellten Ausführungsbeispiele beschränkt. Vielmehr sind zahlreiche Varianten denkbar, die auch bei von dem dargestellten Beispiel abweichender Gestaltung von der in den beiliegenden Ansprüchen angegebenen Erfindung Gebrauch machen.

## Patentansprüche

1. Hilfsrahmen (1) für ein Kraftfahrzeug, insbesondere Vorderachs-Hilfsrahmen, mit einem ersten Schalenelement (1.1) und einem zweiten Schalenelement (1.2), das mit dem ersten Schalenelement (1.1) starr verbunden ist und mit demselben einen Hohlraum (2) definiert, und mit mindestens einer Karosserieanbindungshülse (4) zum Durchstecken einer Schraube (9), wobei die Karosserieanbindungshülse (4) an einem ihrer Enden an einem Durchgangsloch (1.11) des ersten Schalenelements (1.1) festgelegt ist und sich innerhalb des Hohlraums (2) in Richtung eines Durchgangslochs (1.21) des zweiten Schalenelements (1.2) erstreckt, **dadurch gekennzeichnet, dass** dem festgelegten Ende der Karosserieanbindungshülse (4) eine ringförmige Scheibe (4.1) zugeordnet ist, die radial gegenüber der Hülsenmantelfläche vorsteht, außenseitig des ersten Schalenelements (1.1) angeordnet und stoffschlüssig mit demselben verbunden ist, und dass an dem Durchgangsloch (1.21) des zweiten Schalenelements (1.2), dem das andere Ende der Karosserieanbitldungshülse (4) zugewandt ist, außenseitig eine von der Karosserieanbindungshülse (4) separat gefertigte Zahnscheibe (5) angeordnet ist, deren Außendurchmesser größer als der Innendurchmesser des Durchgangslochs (1.21) des zweiten Schalenelements (1.2) ist und die stoffschlüssig mit dem zweiten Schalenelement (1.2) verbunden ist.

2. Hilfsrahmen nach Anspruch 1, **dadurch gekennzeichnet, dass** die ringförmige Scheibe (4.1) stoffschlüssig oder einteilig mit der Karosserieanbindungshülse (4) verbunden ist.

3. Hilfsrahmen nach Anspruch 1 oder 2, **dadurch gekennzeichnet, dass** die Karosserieanbindungshülse (4) und/oder die ringförmige Scheibe (4.1) aus einem anderen Material, vorzugsweise Stahl, als die separat gefertigte Zahnscheibe (5) hergestellt sind/ist.

4. Hilfsrahmen nach einem der Ansprüchech 1 bis 3, **dadurch gekennzeichnet, dass** die separat gefertigte Zahnscheibe (5) aus einem härteren Material als die Karosserieanbindungshülse (4) und/oder die ringförmige Scheibe (4.1) hergestellt ist.

5. Hilfsrahmen nach einem der Ansprüche 1 bis 4, **dadurch gekennzeichnet, dass** die separat gefertigte Zahnscheibe (5) zumindest an ihrer gezahnten Stirn- oder Oberseite einen größeren Außendurchmesser aufweist als die dem festgelegten Ende der Karosserieanbindungshülse (4) zugeordnete Scheibe (4.1) an deren der Karosserieanbindungshülse (4) abgewandtenStirnseite.

6. Hilfsrahmen nach einem der Ansprüche 1 bis 5, **dadurch gekennzeichnet, dass** die separat gefertigte Zahnscheibe (5) einen Außendurchmesser aufweist, der mindestens das 1,4-fache, vorzugsweise mindestens das 1,5-fache des kleinsten Außendurchmessers der Karosserieanbindungshülse (4) beträgt.

7. Hilfsrahmen nach einem der Ansprüche 1 bis 6, dadurch gelcennzeichnet, dass die dem festgelegten Ende der Karosserieanbindungshülse (4) zugeordnete Scheibe (4.1) einen an dem ersten Schalenelement (1.1) anliegenden Befestigungsflansch (4.11) aufweist, der einen die Stirnseite der Scheibe (4.1) umgebenden Absatz (4.3) definiert.

8. Hilfsrahmen nach Anspruch 7, **dadurch gekennzeichnet, dass** der Befestigungsflansch (4.11) einen Außendurchmesser aufweist, der mindestens das 1,4- fache, vorzugsweise mindestens das 1,5-fache des kleinsten Außendurchmessers der Karosserieanbindungshülse (4) beträgt.

9. Hilfsrahmen nach einem der Ansprüche 1 bis 8, **dadurch gekennzeichnet, dass** die separat gefertigte Zahnscheibe (5) einen an dem zweiten Schalenelement (1.2) anliegenden Befestigungsflansch (5.2) aufweist, der einen die gezahnte Ober- oder Stirnseite der Zahnscheibe (5) umgebenden Absatz (5.3) definiert.

10. Hilfsrahmen nach Anspruch 9, **dadurch gekennzeichnet, dass** der Befestigungsflansch (5.2) der Zahnscheibe (5) einen Außendurchmesser aufweist, der mindestens das 1,1- fache, vorzugsweise mindestens das 1,2-fache des kleinsten Außendurchmessers der Zahnscheibe (5) beträgt.

11. Hilfsrahmen nach einem der Ansprüche 1 bis 10, **dadurch gekennzeichnet, dass** durch Anziehen der einsteckbaren Schraube (9) das zweite Schalenelement (1.2) zwischen der separat gefertigten Zahnscheibe (5) und der Karosserieanbindungshülse (4) einklemmbar ist.

12. Hilfsrahmen, nach einem der Ansprüche 1 bis 11, **gekennzeichnet durch** eine Unterschale und eine damit starr verbundene Oberschale, wobei das erste Schalenelement (1.1) die Unterschale und das zweite Schalenelement (1.2) die Oberschale des Hilfsrahmens (1) sind.

13. Hilfsrahmen nach einem der Ansprüche 1 bis 12, **dadurch gekennzeichnet, dass** die dem festgelegten Ende der Karosserieanbindüngshülse (4) zugeordnete Scheibe (4.1) eine gezahnte Stirnseite aufweist.

14. Karosserie mit einem Hilfsrahmen (1) nach einem der Ansprüche 1 bis 13, **dadurch gekennzeichnet, dass** die separat gefertigte Zahnscheibe (5) eine höhere Härte aufweist als der damit verbundene Abschnitt (6) der Karosserie.

15. Karosserie nach Anspruch 14 oder mit einem Hilfsrahmen nach einem der Ansprüche 1 bis 13, **dadurch gekennzeichnet, dass** die dem festgelegten Ende der Karosserieanbindungshülse (4) zugeordnete Scheibe (4.1) eine höhere Härte aufweist als ein damit verbundenes Karosserieblech (10).

## Claims

1. Subframe (1) for a motor vehicle, in particular a front axle subframe, comprising a first shell element (1.1) and a second shell element (1.2) which is rigidly connected to the first shell element (1.1) and defines a cavity (2) therewith, and comprising at least one bodywork connection sleeve (4) for inserting a screw (9) therethrough, the bodywork connection sleeve (4) being attached at one of its ends to a through-hole (1.11) in the first shell element (1.1) and extending within the cavity (2) towards a through-hole (1.21) in the second shell element (1.2), **characterised in that** an annular disc (4.1) is allocated to the attached end of the bodywork connection sleeve (4), which disc projects radially relative to the outer surface of the sleeve, is arranged on the outside of the first shell element (1.1) and is integrally bonded thereto, and **in that** a toothed disc (5) produced separately from the bodywork connection sleeve (4) is arranged on the outside on the through-hole (1.21) in the second shell element (1.2), which the other end of the bodywork connection sleeve (4) faces, which toothed disc has an external diameter which is greater than the internal diameter of the through-hole (1.21) in the second shell element (1.2), and is integrally bonded to the second shell element (1.2).

2. Subframe according to claim 1, **characterised in that** the annular disc (4.1) is integrally bonded or connected in one piece to the bodywork connection sleeve (4).

3. Subframe according to either claim 1 or claim 2, **characterised in that** the bodywork connection sleeve (4) and/or the annular disc (4.1) is/are made of a different material, preferably steel, to the separately produced toothed disc (5).

4. Subframe according to any of claims 1 to 3, **characterised in that** the separately produced toothed disc (5) is made of a harder material than the bodywork connection sleeve (4) and/or the annular disc (4.1).

5. Subframe according to any of claims 1 to 4, **characterised in that** the separately produced toothed disc (5) has, at least on its toothed front side or top side, a greater external diameter than the disc (4.1), which is allocated to the attached end of the bodywork connection sleeve (4), on its front side which faces away from the bodywork connection sleeve (4).

6. Subframe according to any of claims 1 to 5, **characterised in that** the separately produced toothed disc (5) has an external diameter that is at least 1.4 times, preferably at least 1.5 times, greater than the smallest external diameter of the bodywork connection sleeve (4).

7. Subframe according to any of claims 1 to 6, **characterised in that** the disc (4.1) allocated to the attached end of the bodywork connection sleeve (4) comprises an attachment flange (4.11) which abuts the first shell element (1.1) and defines a shoulder (4.3) that surrounds the front side of the disc (4.1).

8. Subframe according to claim 7, **characterised in that** the attachment flange (4.11) has an external diameter that is at least 1.4 times, preferably at least 1.5 times, greater than the smallest external diameter of the bodywork connection sleeve (4).

9. Subframe according to any of claims 1 to 8, **characterised in that** the separately produced toothed disc (5) comprises an attachment flange (5.2) which abuts the second shell element (1.2) and defines a shoulder (5.3) that surrounds the toothed top side or front side of the toothed disc (5).

10. Subframe according to claim 9, **characterised in that** the attachment flange (5.2) of the toothed disc (5) has an external diameter that is at least 1.1 times, preferably at least 1.2 times, greater than the smallest external diameter of the toothed disc (5).

11. Subframe according to any of claims 1 to 10, **characterised in that** by tightening the insertable screw (9), the second shell element (1.2) can be clamped between the separately produced toothed disc (5) and the bodywork connection sleeve (4).

12. Subframe according to any of claims 1 to 11, **characterised by** a lower shell and an upper shell that is rigidly connected thereto, the first shell element (1.1) being the lower shell and the second shell element (1.2) being the upper shell of the subframe (1).

13. Subframe according to any of claims 1 to 12, **characterised in that** the disc (4.1) allocated to the attached end of the bodywork connection sleeve (4) has a toothed front side.

14. Bodywork comprising a subframe (1) according to any of claims 1 to 13, **characterised in that** the separately produced toothed disc (5) has a greater hardness than the portion (6) of the bodywork connected thereto.

15. Bodywork according to claim 14 or comprising a subframe according to any of claims 1 to 13, **characterised in that** the disc (4.1) allocated to the attached end of the bodywork connection sleeve (4) has a greater hardness than a bodywork panel (10) connected thereto.

## Revendications

1. Châssis auxiliaire (1) pour un véhicule automobile, en particulier châssis auxiliaire (1) d'essieu avant, avec un premier élément en forme de coque (1.1) et un deuxième élément en forme de coque (1.2), qui est relié rigidement au premier élément en forme de coque (1.1) et définit avec celui-ci un espace creux (2), et avec au moins une douille de raccordement à la carrosserie (4), qui est destinée à recevoir une vis (9), sachant que la douille de raccordement à la carrosserie (4) est fixée, à l'une de ses extrémités, à un trou de passage (1.11) du premier élément en forme de coque (1.1) et s'étend à l'intérieur dudit espace creux (2), en direction d'un trou de passage (1.21) du deuxième élément en forme de coque (1.2), **caractérisée en ce que** l'extrémité fixée de la douille de raccordement à la carrosserie (4) est associée à une rondelle en forme de bague (4.1) qui fait radialement saillie par rapport à la surface latérale de la douille, est disposée sur la côté extérieur du premier élément en forme de coque (1.1) et est reliée à celui-ci par liaison de matériau, et que, sur le trou de passage (1.21) du deuxième élément en forme de coque (1.2), vers lequel est dirigée l'autre extrémité de la douille de raccordement à la carrosserie (4), est disposé, sur le côté extérieur, un disque denté (5), fabriqué séparément, dont le diamètre extérieur est plus grand que le diamètre intérieur du trou de passage (1.21) du deuxième élément en forme de coque (1.2), et qui est relié au deuxième élément en forme de coque (1.2) par liaison de matériau.

2. Châssis auxiliaire selon la revendication 1, **caractérisée en ce que** la rondelle en forme de bague (4.1) est reliée à la douille de raccordement à la carrosserie (4) par liaison de matériau ou formée d'une pièce avec celle-ci.

3. Châssis auxiliaire selon revendication 1 ou 2, **caractérisée en ce que** la douille de raccordement à la carrosserie (4) et / ou la rondelle en forme de bague (4.1) sont fabriquées / est fabriquée en un autre matériau, de préférence en acier, que le disque denté (5), fabriqué séparément.

4. Châssis auxiliaire selon l'une des revendications 1 à 3, **caractérisée en ce que** le disque denté (5), fabriqué séparément, consiste en un matériau plus dur que la douille de raccordement à la carrosserie (4) et / ou que la rondelle en forme de bague (4.1).

5. Châssis auxiliaire selon l'une des revendications 1 à 4, **caractérisée en ce que** le disque denté (5), fabriqué séparément, est doté, au moins sur sa face frontale ou sur sa face supérieure dentée, d'un diamètre extérieur plus grand que celui, dont la rondelle (4.1), associée à l'extrémité fixée de la douille de raccordement à la carrosserie (4), est dotée sur sa face frontale, opposée à ladite douille de raccordement à la carrosserie (4).

6. Châssis auxiliaire selon l'une des revendications 1 à 5, **caractérisée en ce que** le disque denté (5), fabriqué séparément, est doté d'un diamètre extérieur qui correspond au moins à 1,4 fois, de préférence à 1,5 fois le plus petit diamètre extérieur de la douille de raccordement à la carrosserie (4).

7. Châssis auxiliaire selon l'une des revendications 1 à 6, **caractérisée en ce que** la rondelle (4.1), associée à l'extrémité fixée de la douille de raccordement à la carrosserie (4), est dotée d'une bride de fixation (4.11), adjacente au premier élément en forme de coque (1.1), qui définit un gradin (4.3) entourant la face frontale de la rondelle (4.1).

8. Châssis auxiliaire selon la revendication 7, **caractérisée en ce que** la bride de fixation (4.11) est doté d'un diamètre extérieur qui correspond au moins à 1,4 fois, de préférence à 1,5 fois le plus petit diamètre extérieur de la douille de raccordement à la carrosserie (4).

9. Châssis auxiliaire selon l'une des revendications 1 à 8, **caractérisée en ce que** le disque denté (5), fabriqué séparément, est doté d'une bride de fixation (5.2), adjacente au deuxième élément en forme de coque (1.2), laquelle définit un gradin (5.3) qui entoure la face supérieure ou la face frontale dentée dudit disque denté (5).

10. Châssis auxiliaire selon la revendication 9, **caractérisée en ce que** la bride de fixation (5.2) du disque denté (5) est dotée d'un diamètre extérieur qui correspond au moins à 1,1 fois, de préférence à au moins 1,2 fois le plus petit diamètre extérieur du disque denté (5).

11. Châssis auxiliaire selon l'une des revendications 1 à 10, **caractérisée en ce que**, par serrage de la vis insérable (9), le deuxième élément en forme de coque (1.2) peut être coincé entre le disque denté (5), fabriqué séparément, et la douille de raccordement à la carrosserie (4).

12. Châssis auxiliaire selon l'une des revendications 1 à 11, **caractérisée par** une coque inférieure et une coque supérieure, reliée rigidement à celle-ci, sachant que le premier élément en forme de coque (1.1) est la coque inférieure et que le deuxième élément en forme de coque (1.2) est la coque supérieure.

13. Châssis auxiliaire selon l'une des revendications 1 à 12, **caractérisée en ce que** la rondelle (4.1), associée à l'extrémité fixée de la douille de raccordement à la carrosserie (4), est dotée d'une face frontale dentée.

14. Carrosserie avec un châssis auxiliaire selon l'une des revendications 1 à 13, **caractérisée en ce que** le disque denté (5), fabriqué séparément, présente une dureté plus élevée que le secteur (6) de la carrosserie qui lui est relié.

15. Carrosserie selon la revendication 14 ou avec un châssis auxiliaire selon l'une des revendications 1 à 13, **caractérisée en ce que** la rondelle (4.1), associée à l'extrémité fixée de la douille de raccordement à la carrosserie (4), est dotée d'une dureté plus élevée qu'une tôle de carrosserie (10) qui lui est reliée.
